# EUROPEAN PATENT APPLICATION

(11) **EP 4 498 482 A1**
(43) Date of publication of application: **29.01.2025**
(21) Application number: 24180375.8
(22) Date of filing: 06.06.2024
(51) Int. Cl.: H01M 10/658, B60L 50/64, H01M 50/293

(54) **BATTERY MODULE**

(30) Priority: 27.07.2023 KR 20230098057
(71) Applicant: Samsung SDI Co., Ltd., Yongin-si, Gyeonggi-do 17084 (KR)
(72) Inventor: Lee, Jae Hyun, 17084 Yongin-si, Gyeonggi-do (KR); Ryu, Bo Kyung, 17084 Yongin-si, Gyeonggi-do (KR); Yang, Seung Yong, 17084 Yongin-si, Gyeonggi-do (KR); Park, Hye Jin, 17084 Yongin-si, Gyeonggi-do (KR); Ra, Ha Na, 17084 Yongin-si, Gyeonggi-do (KR); Woo, Myung Heui, 17084 Yongin-si, Gyeonggi-do (KR); Kim, Sang Hoon, 17084 Yongin-si, Gyeonggi-do (KR)
(74) Representative: Gulde & Partner

(57) **Abstract**

A battery module including a plurality of cells, an insulation sheet between the plurality of cells, the insulation sheet having an upper surface and a lower surface disposed so as to face cells adjacent thereto, respectively, and a refractory layer formed on at least one side surface part of a border side surface between the upper surface and the lower surface of the insulation sheet, wherein the refractory layer includes an inorganic binder. A method of manufacturing the battery module, and a battery pack including the battery module.

## Description

### BACKGROUND

### 1. Field

Example embodiments relate to a battery module, a method of manufacturing the battery module, and a battery pack including the battery module.

### 2. Description of the Related Art

A secondary battery is a power storage system that is configured to convert electrical energy into chemical energy, to store the chemical energy, and to provide high energy density. Compared to a primary battery, which is typically not rechargeable, a secondary battery is typically rechargeable and is widely used in information technology (IT) devices such as, e.g., smartphones, cellular phones, laptop computers, tablet computers, and the like. There is an increased interest in electric vehicles to reduce or prevent environmental pollution, and a high-capacity secondary battery is often adopted in electric vehicles. Secondary batteries typically exhibit characteristics such as, e.g., high density, high output, and stability.

When a plurality of high-capacity cells is included, as in a lithium secondary battery, one cell may overheat and may go into thermal runaway for various reasons, which may adversely affect other cells adjacent thereto, and therefore it may be advantageous to thermally isolate neighboring cells from each other.

Conventionally, a plate or an insulating resin sheet is disposed between cells to isolate and insulate neighboring cells from each other.

### SUMMARY

The invention is defined by the appended claims. The description that follows is subjected to this limitation. Any disclosure lying outside the scope of said claims is only intended for illustrative as well as comparative purposes. Example embodiments include a battery module having desired, advantageous or improved thermal insulation, fire resistance, and flame retardancy or non-flammability to inhibit propagation of heat in a cell to cells adjacent thereto due to thermal runaway in the cell, a method of manufacturing the battery module, and a battery pack including the battery module.

An example embodiment includes a battery module including a plurality of cells, an insulation sheet between the plurality of cells, the insulation sheet having an upper surface and a lower surface arranged so as to face cells adjacent thereto, respectively, and a refractory layer formed on at least one side surface part of a border side surface between the upper surface and the lower surface of the insulation sheet, wherein the refractory layer includes an inorganic binder.

Each, or one or more, of the cells may be or include a secondary battery cell.

The insulation sheet may include a first substrate, a second substrate, and an aerogel layer between the first substrate and the second substrate.

Each, or one or more, of the first substrate and the second substrate may include at least one of a resin, a metal, an inorganic material other than the metal, and a composite thereof.

The aerogel layer may include an aerogel, a fibrous support, and a functional material including a binder, a dispersant, or a combination thereof.

The aerogel may have a Brunauer, Emmett and Teller (BET) specific surface area in a range of 500 m²/g to 1,000 m²/g.

The fibrous support may be at least one of natural fiber, silica fiber, glass fiber, ceramic fiber, carbon fiber, graphite fiber, mineral fiber, and polymer fiber.

The binder may include an aqueous polymer binder, and the aqueous polymer binder may be or include at least one of a water-based polymer, an anionic water-soluble polymer, a cationic water-soluble polymer, and a water-dispersible polymer.

The dispersant may be at least one of a surfactant and a phosphate-based salt.

The aerogel may be included so as to account for 10 wt% to 90 wt%, the fibrous support may be included so as to account for 5 wt% to 70 wt%, and the functional material may be included so as to account for 0.5 wt% to 20 wt%, based on the total amount of the aerogel layer.

The inorganic binder may be at least one of aluminate, silicate, phosphate, sulfate, and chloride.

The inorganic binder may be at least one of ordinary calcium aluminate, pure calcium aluminate, sodium silicate, potassium silicate, lithium silicate, sodium phosphate, potassium phosphate, magnesium phosphate, zinc phosphate, calcium phosphate, aluminum phosphate, iron phosphate, sodium dihydrogen phosphate, sodium tripolyphosphate, sodium hexametaphosphate, magnesium sulfate, aluminum sulfate, iron (III) sulfate, magnesium chloride, iron (III) chloride, and polyaluminum chloride.

The refractory layer may be formed on an upper side surface part of the side surface of the insulation sheet, upper and lower side surface parts of the side surface of the insulation sheet, or the entirety of the side surface of the insulation sheet.

The thickness of the refractory layer formed on the upper side surface part of the side surface of the insulation sheet may be 120% to 400% of the thickness of the refractory layer formed on the lower side surface part of the side surface of the insulation sheet.

The battery module may include an empty space other than a space in which the cells and the insulation sheet are located, the refractory layer may be configured to wrap the side surface of the insulation sheet and a part or the entirety of a side surface of each of the cells adjacent thereto in the empty space formed in an upper part of the battery module, and the refractory layer may be formed such that the thickness of a central part of the refractory layer is greater than the thickness of opposite edges of the refractory layer.

Another example embodiment includes a method of manufacturing a battery module, the method including disposing a plurality of cells, disposing an insulation sheet between the plurality of cells such that an upper surface and a lower surface of the insulation sheet face cells adjacent thereto, respectively, and forming a refractory layer on at least one side surface part of a border side surface between the upper surface and the lower surface of the insulation sheet, wherein the refractory layer includes an inorganic binder.

Forming the refractory layer may be performed before or after disposing the insulation sheet between the plurality of cells.

Forming the refractory layer may be performed by at least one of gap coating, dip coating, slot die coating, blade coating, dispensing, printing, brush coating, and potting using a solution of an inorganic binder dispersed in a solvent.

A further example embodiment includes a battery pack including the battery module.

### BRIEF DESCRIPTION OF THE DRAWINGS

The accompanying drawings, which are incorporated in this specification, illustrate example embodiments and serve to further illustrate the technical ideas of the disclosure in conjunction with the detailed description of example embodiments that follows, and the disclosure is not to be construed as limited to what is shown in such drawings. In the drawings:
FIGS. 1 to 5 are schematic views showing the structure of a battery module according to example embodiments;
FIG. 6 is a schematic view showing the sectional structure of an insulation sheet according to an example embodiment;
FIG. 7 is a photograph showing the results of a fire resistance evaluation experiment; and
FIG. 8 is a graph showing the results of a thermal runaway delay evaluation.

### DETAILED DESCRIPTION OF EXEMPLARY EMBODIMENTS

Hereinafter, example embodiments will be described in detail such that a person having ordinary skill in the art can readily implement the example embodiments. However, example embodiments may be implemented in many different forms and are not limited to the example embodiments described herein.

A battery module includes a plurality of cells, an insulation sheet between the plurality of cells, the insulation sheet having an upper surface and a lower surface configured to face cells adjacent thereto, respectively, and a refractory layer on at least one side surface part of a border side surface between the upper surface and the lower surface of the insulation sheet, wherein the refractory layer includes an inorganic binder.

In the battery module according to the example embodiment, the refractory layer may be formed on at least one of an upper side surface part, a lower side surface part, a front side surface part, and a rear side surface part of the border side surface of the insulation sheet. As an example, the refractory layer may be formed on the upper side surface part of the border side surface of the insulation sheet, the upper side surface part and the lower side surface part of the border side surface of the insulation sheet, or the entirety of the border side surface of the insulation sheet. As another example, the refractory layer may be essentially formed on the upper side surface part of the border side surface of the insulation sheet.

In the battery module according to the example embodiment, the refractory layer may be formed so as to cover a part of the entirety of an externally exposed portion of the surface of the insulation sheet that does not face the cell.

In the battery module according to the example embodiment, the refractory layer may be formed so as to further cover a part or the entirety of the cell adjacent to the insulation sheet.

The battery module having the above structure may have desired, advantageous or improved thermal insulation, fire resistance, and flame retardancy or non-flammability, thereby inhibiting propagation of heat and flames in a cell to cells adjacent thereto due to thermal runaway in the cell. Conventionally, when an insulation sheet is provided between cells for thermal insulation, a border side surface of the insulation sheet may be exposed to air, and propagation of heat or flames to the exposed side surface may occur during thermal runaway, which may be effectively inhibited by a battery module according to an example embodiment that includes a refractory layer. The insulation sheet may have desired, advantageous or improved compressibility, mechanical strength, and dimensional stability, and may reduce or prevent detachment of an aerogel layer due to external impact, thereby improving workability and reducing or preventing contamination of an instrument.

In an example embodiment, the cell may be a secondary battery cell. The secondary battery cell may be, for example, a lithium secondary battery. The lithium secondary battery may be manufactured in various forms, such as, e.g., a lithium ion battery, an all-solid-state battery, a lithium metal battery, and the like. For example, the lithium secondary battery may have a structure in which a positive electrode plate having a positive electrode active material applied thereto and a negative electrode plate having a negative electrode active material applied thereto are arranged such that a separator is interposed therebetween, and the lithium secondary battery may be received in a battery case together with an electrolytic solution in a sealed state to constitute a secondary battery cell. Depending on the shape of the battery case, the secondary battery cell may be classified as, e.g., a cylindrical secondary battery cell, a prismatic secondary battery cell, or a pouch-shaped secondary battery cell, and a plurality of secondary battery cells may be connected to each other in series or in parallel to constitute a battery module.

The secondary battery cell may require a high degree of stability so that, e.g., when overcharged, the positive electrode active material or an electrolyte may be subjected to decomposition and other side reactions, whereby heat may be emitted from the secondary battery, resulting in a possible explosion of the secondary battery cell.

In a battery module according to an example embodiment, an insulation sheet may be disposed between cells, and a refractory layer may be provided on a side surface of the insulation sheet, whereby the battery module may have desired, advantageous or improved thermal insulation, fire resistance, and flame retardancy or non-flammability, and therefore it is possible to reduce or inhibit propagation of heat and flames in a cell to cells adjacent thereto due to thermal runaway in the cell.

In this description, the terms "left" and "right" are based on the drawing. For example, when a "left" surface of a cuboid is referred to as a first side surface, a "right" surface of the cuboid may be referred to as a second side surface opposite the first side surface.

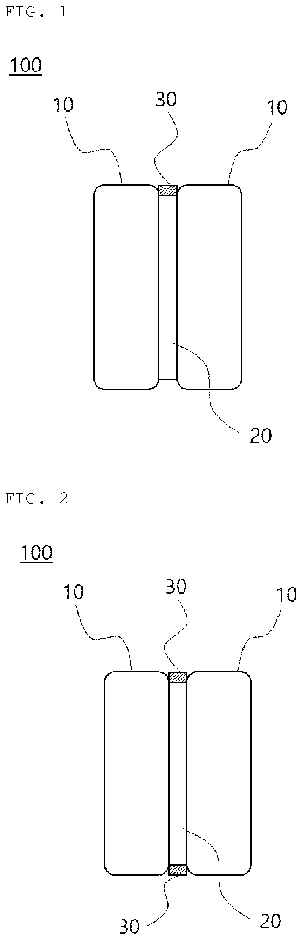

FIG. 1 is a schematic view showing a part of a battery module according to an example embodiment, the battery module including an insulation sheet disposed between a plurality of cells, wherein a refractory layer is formed on an upper side surface part of a side surface of the insulation sheet. In this case, flames generated in one cell may be hindered or prevented from moving to an empty space in the battery module through the upper side surface part of the side surface of the insulation sheet, thereby effectively reducing or preventing the propagation of the flames to cells adjacent thereto.

Referring to FIG. 1, the battery module 100 according to the example embodiment may include a plurality of cells 10, and may include an insulation sheet 20 provided between the plurality of cells 10. The insulation sheet 20 may be disposed such that an upper surface and a lower surface of the insulation sheet 20 face cells 10 adjacent thereto, respectively. The battery module 100 may further include a refractory layer 30 formed on an upper side surface part of a side surface of the insulation sheet 20. Thus, it is possible to provide a battery module with increased safety by hindering or blocking flames in advance in the event of thermal runaway in one cell in order to advantageously reduce or inhibit propagation of the flames to other cells, and further to provide a secondary battery pack including the battery module.

In an example embodiment, the refractory layer may be formed on upper and lower side surface parts of the side surface of the insulation sheet, or on substantially the entirety of the side surface of the insulation sheet. In this description, the terms "upper side surface part" and "lower side surface part" refer to surfaces formed at an upper side and a lower side of the insulation sheet, respectively, based on the form in which the insulation sheet is disposed.

As an example, the refractory layer may be formed on substantially the entirety of the side surface of the insulation sheet. In this case, flames generated in one cell may be hindered or prevented from moving to the empty space in the battery module through the side surface of the insulation sheet, thereby effectively reducing or preventing the propagation of the flames to cells adjacent thereto.

As another example, the refractory layer may be formed on the upper side surface part and the lower side surface part of the side surface of the insulation sheet, which are opposite to each other. In this case, installation of the refractory layer may be reduced or minimized, and flames generated in one cell may be hindered or prevented from moving to the empty space in the battery module through the upper side surface part and the lower side surface part of the side surface of the insulation sheet, thereby more effectively reducing or preventing the propagation of flames to cells adjacent thereto.

FIG. 2 is a schematic view showing a part of an example battery module including an insulation sheet disposed between a plurality of cells, wherein a refractory layer is formed on an upper side surface part and a lower side surface part of a side surface of the insulation sheet.

Referring to FIG. 2, the battery module 100 may include a plurality of cells 10, and may include an insulation sheet 20 between the plurality of cells 10. The insulation sheet 20 may be such that an upper surface and a lower surface of the insulation sheet face cells 10 adjacent thereto, respectively. The battery module 100 may further include a refractory layer 30 formed on an upper side surface part and a lower side surface part of a side surface of the insulation sheet 20. Thus, it is possible to provide a battery module with increased safety by hindering or blocking flames in advance in the event of thermal runaway in one cell to advantageously inhibit propagation of the flames to other cells and further to provide a secondary battery pack including the battery module.

In an example embodiment, even when the refractory layer is formed on the entirety, or substantially the entirety, of the side surface of the insulation sheet, the refractory layer formed on a front side surface part and a rear side surface part of the side surface of the insulation sheet is not shown in a sectional view, and therefore the refractory layer formed on the front side surface part and the rear side surface part of the side surface of the insulation sheet is not shown in FIG. 2.

In an example embodiment, the thickness of the refractory layer formed on the upper side surface part of the side surface of the insulation sheet may be 120% to 400%, 150% to 350%, or 200% to 350% of the thickness of the refractory layer formed on the lower side surface part of the side surface of the insulation sheet. The thickness of the refractory layer formed on the upper side surface part of the side surface of the insulation sheet may be at least one of 1.2 to 4 times, 1.5 to 3.5 times, and 2 to 3.5 times the thickness of the refractory layer formed on the lower side surface part of the side surface of the insulation sheet. By controlling the thickness ratio of the refractory layer formed on the upper side surface part and the lower side surface part of the side surface of the insulation sheet as described above, it is possible to effectively hinder or prevent flames from moving upward and from spreading in the event of thermal runaway in one cell.

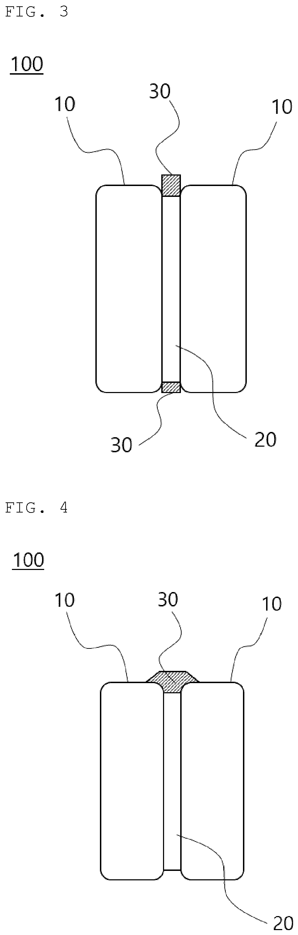

FIG. 3 is a schematic view showing a part of a battery module including an insulation sheet between a plurality of cells, wherein a refractory layer is formed on an upper side surface part and a lower side surface part of a side surface of the insulation sheet, and the thickness of the refractory layer formed on the upper side surface part is greater than the thickness of the refractory layer formed on the lower side surface part.

Referring to FIG. 3, the battery module 100 may include a plurality of cells 10, and may include an insulation sheet 20 between the plurality of cells 10. The insulation sheet 20 may be such that an upper surface and a lower surface of the insulation sheet face cells 10 adjacent thereto, respectively. The battery module 100 may further include a refractory layer 30 formed on an upper side surface part and a lower side surface part of a side surface of the insulation sheet 20, wherein the thickness of the refractory layer formed on the upper side surface part may be greater than the thickness of the refractory layer formed on the lower side surface part. Thus, it is possible to provide a battery module with increased safety by hindering or blocking upward movement of flames in the event of thermal runaway in one cell to advantageously reduce or inhibit propagation of the flames to other cells and further to provide a secondary battery pack including the battery module.

In an example embodiment, the battery module may include an empty space other than a space in which the cells and the insulation sheet are disposed, the refractory layer may be formed so as to wrap the side surface of the insulation sheet and a part or the entirety of a side surface of each of the cells adjacent thereto in the empty space formed in an upper part of the battery module, and the refractory layer may be formed such that the thickness of a central part of the refractory layer is greater than the thickness of opposite edges of the refractory layer. For example, the refractory layer may be formed in a trapezoidal shape, a dome shape, or the like. When the refractory layer is formed such that the thickness of the central part of the refractory layer is greater than the thickness of the opposite edges of the refractory layer, as described above, it is possible to hinder or prevent flames and heat in one cell from being transferred to cells adjacent thereto through a vent located in the center in a planar direction of the cell during thermal runaway in the cell through heat and flame shielding at the central part of the refractory layer, and therefore it is possible to delay or prevent further thermal runaway.

FIG. 4 is a schematic view showing a part of a battery module including an insulation sheet between a plurality of cells, wherein a refractory layer is formed on an upper side surface part of a side surface of the insulation sheet, and the refractory layer is formed in a trapezoidal shape.

Referring to FIG. 4, the battery module 100 may include a plurality of cells 10, and may include an insulation sheet 20 between the plurality of cells 10. The insulation sheet 20 may be such that an upper surface and a lower surface of the insulation sheet face cells 10 adjacent thereto, respectively. The battery module 100 may further include a refractory layer 30 formed on an upper side surface part of a side surface of the insulation sheet 20. The refractory layer 30 may be formed in a trapezoidal shape in which the thickness of a central part of the refractory layer may be greater than the thickness of opposite edges of the refractory layer. The refractory layer may also be formed on a lower side surface part of the side surface of the insulation sheet, wherein the thickness of the refractory layer formed on the lower side surface part may be less than the thickness of the refractory layer formed on the upper side surface part. Thus, it is possible to provide a battery module with increased safety by hindering or blocking flames in advance in the event of thermal runaway in one cell to substantially inhibit propagation of the flames to other cells, and further to provide a secondary battery pack including the battery module.

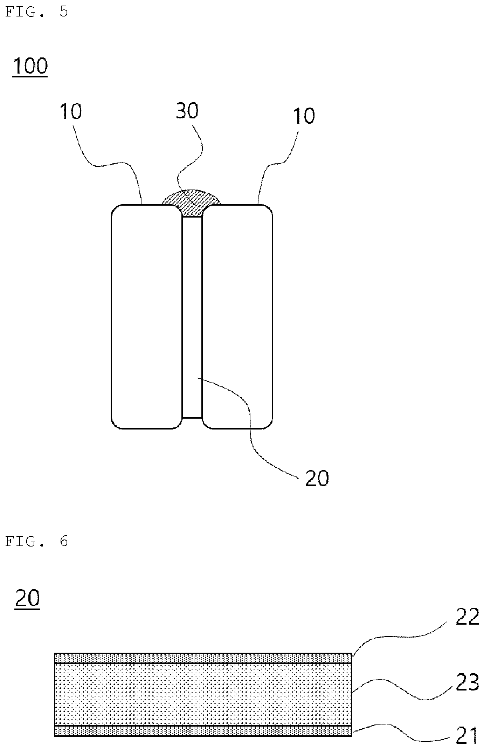

FIG. 5 is a schematic view showing a part of a battery module including an insulation sheet between a plurality of cells, wherein a refractory layer is formed on an upper side surface part of a side surface of the insulation sheet, and the refractory layer is formed in a dome shape.

Referring to FIG. 5, the battery module 100 may include a plurality of cells 10, and may include an insulation sheet 20 between the plurality of cells 10. The insulation sheet 20 may be such that an upper surface and a lower surface of the insulation sheet face cells 10 adjacent thereto, respectively. The battery module 100 may further include a refractory layer 30 formed on an upper side surface part of a side surface of the insulation sheet 20, wherein the refractory layer 30 may have a dome shape in which the thickness of a central part of the refractory layer is greater than the thickness of opposite edges of the refractory layer. The refractory layer may also be formed on a lower side surface part of the side surface of the insulation sheet, wherein the thickness of the refractory layer formed on the lower side surface part may be lower than the thickness of the refractory layer formed on the upper side surface part. Thus, it is possible to provide a battery module with increased safety by hindering or blocking flames in advance in the event of thermal runaway in one cell to substantially inhibit propagation of the flames to other cells, and further to provide a secondary battery pack including the battery module.

In an example embodiment, the insulation sheet may include a first substrate, a second substrate, and an aerogel layer between the first substrate and the second substrate. The first substrate and the second substrate may form an upper surface and a lower surface of the insulation sheet, respectively, and may be configured to face cells adjacent thereto, respectively. The insulation sheet may include a border side surface provided between the upper surface and the lower surface of the insulation sheet.

FIG. 6 is a schematic view showing the structure of an insulation sheet according to an example embodiment.

Referring to FIG. 6, the insulation sheet 20 may have a structure including a first substrate 21, a second substrate 22, and an aerogel layer 23 between the first substrate 21 and the second substrate 22. The first substrate 21 and the second substrate 22 may form an upper surface and a lower surface of the insulation sheet 20, respectively, and may be configured to face cells 10 adjacent thereto, respectively.

Each, or at least one of, the first substrate and the second substrate may be made of or include at least one of, without being limited to, a resin, a metal, and an inorganic material other than the metal, or may be made of or include a composite thereof. The form of the substrate may be, without being limited to, a film, a membrane, a sheet, and the like.

The resin may be at least one of, for example, polyethylene, polypropylene, polystyrene, polyethylene terephthalate, and polyamide.

The metal may be or include at least one of, for example, copper, nickel, cobalt, iron, chromium, vanadium, palladium, ruthenium, rhodium, molybdenum, tungsten, iridium, silver, gold, and platinum. When a substrate made of or include any of the above metals is used, the substrate may be subjected to anticorrosion treatment or insulating treatment as needed.

The inorganic material may be or include at least one of calcium carbonate (CaCO₃), talc, and mica.

As an example, each, or at least one of, the first substrate and the second substrate may include an inorganic material, and as another example, the substrate may include mica. In this case, thermal insulation, durability, etc. of the insulation sheet may be improved.

The aerogel layer may include an aerogel, a fibrous support, and a functional material including a binder, a dispersant, or a combination thereof.

In an example embodiment, the aerogel may have a BET specific surface area of 500 m²/g to 1,000 m²/g. For example, the aerogel may have a BET specific surface area of 500 m²/g to 950 m²/g, 550 m²/g to 950 m²/g, or 600 m²/g to 900 m²/g. When the aerogel having a BET specific surface area value within the above range is included, it is possible to provide an insulation sheet capable of effectively reducing or preventing heat transfer and heat propagation between a plurality of cells. The BET is measured according to DIN ISO 9277.

The average particle size D50 of the aerogel may be 5 um to 200 um, 10 um to 100 um, or 20 um to 50 um. When the aerogel having a particle size within the above range is included, thermal insulation may be improved, whereby heat transfer between the plurality of cells may be delayed.

The average particle size D50 may be measured, for example, using a laser diffraction method, or scanning electron microscopy (SEM), wherein the average particle size D50 of particles may be defined as the particle size at 50% of the particle size distribution (the particle size corresponding to cumulative 50% of the volume of the particle size distribution).

The content of the aerogel may be 10 wt% to 90 wt%, 30 wt% to 70 wt%, or 40 wt% to 60 wt%, based on the total amount of the aerogel layer. When an insulation sheet including the aerogel within the above range is manufactured, thermal insulation of the insulation sheet may be improved.

In an example embodiment, the fibrous support may be included in the aerogel layer, whereby durability of the insulation sheet formed using the same may be improved.

The fibrous support may include fiber used as a support made of or include, e.g., an ordinary insulating material. For example, the fibrous support may be or include at least one of natural fiber, silica fiber, glass fiber, ceramic fiber, carbon fiber, graphite fiber, mineral fiber, and polymer fiber. As an example, the fibrous support may include, without being limited to, glass fiber.

The natural fiber may be at least one of, for example, hemp, jute, flax, coir, Kenaf, and cellulose.

The ceramic fiber may be at least one of silicon carbide, silicon nitride, boron nitride, and aluminum silicon carbide.

The mineral fiber may include at least one of, for example, basalt, diatomite, alumina, boron, quartz, silica, slag, and rock.

The polymer fiber may be at least one of, for example, nylon, polyimide, polyamide, polybenzimidazole, polybenzoxazole, polyamideimide, polyethylene terephthalate, polybutylene terephthalate, polyester, polyethylene (PE), and polypropylene (PP). As an example, the polymer fiber may be at least one of, without being limited to, polyimide, polyamide, and polybenzimidazole.

The fibrous support may be in the form of at least one of, for example, without being limited to, powder, wool, chop, felt, batting, and lofty batting.

The average diameter of the fibrous support may be, for example, 0.1 um to 20 um, 0.1 um to 15 um, 0.1 um to 5 um, 1 um to 15 um, or 3 um to 10 um. By including a fibrous support having an average diameter within the above range, the structure of the aerogel layer may be stiffened and manufacturing costs may be reduced.

The average length of the fibrous support may be, for example, 50 um to 1000 um, 70 um to 800 um, or 100 um to 600 um. By including a fibrous support having an average length within the above range, the aerogel layer may be formed robustly, and durability may be improved.

The content of the fibrous support may be 5 wt% to 70 wt%, 25 wt% to 60 wt%, or 30 wt% to 50 wt%, based on the total amount of the aerogel layer. When an insulation sheet is manufactured using an aerogel layer including a fibrous support within the above range, durability may be improved.

In an example embodiment, the binder may include an aqueous polymer binder. For example, the aqueous polymer binder may be at least one of a water-based polymer, an anionic water-soluble polymer, a cationic water-soluble polymer, and a water-dispersible polymer.

The water-based polymer may be at least one of, for example, without being limited to, polyvinyl alcohol, polyethylene oxide, polyacrylamide, and polyvinylpyrrolidone.

The anionic water-soluble polymer may be at least one of carboxylic acid, sulfonic acid, sulfuric acid ester, phosphoric acid ester, and a polymer having functional groups of salts thereof. For example, the anionic water-soluble polymer may be a polymer having a carboxylic acid group, and may include, without being limited to, polymaleic acid as an example.

The cationic water-soluble polymer may be at least one of amine, ammonium, phosphonium, sulfonium, and a polymer having functional groups of salts thereof. For example, the cationic water-soluble polymer may be a polymer having an amine group, and may be at least one of, without being limited to, polyethylene amine and polyamine as a specific example.

The water-dispersible polymer may be, without being limited to, at least one of water-dispersible polyurethane and water-dispersible polyester.

The binder may include a water-based polymer and a water-dispersible polymer. For example, the binder may include a water-based polymer having binder properties and dispersing properties, and having water-dispersible polyurethane having fire-resistant properties. As an example, the binder may include polyvinyl alcohol and water-dispersible polyurethane.

The weight ratio of the water-based polymer to the water-dispersible polymer may be 1:1 to 1:5, 1:1 to 1:4, or 1:2 to 1:3. When the weight ratio of the water-based polymer to the water-dispersible polymer is within the above range, fire resistance and mechanical properties of the insulation sheet may be further improved in addition to the thermal insulation, the dustiness, and the compression properties of the insulation sheet.

The content of the binder may be 0.5 wt% to 20 wt%, 2 wt% to 15 wt%, or 8 wt% to 15 wt%, based on the total amount of the aerogel layer. When an insulation sheet is manufactured using an aerogel composition including a binder within the above range, dustiness of the insulation sheet may be improved.

The content of the binder may be 0.5 wt% to 20 wt%, 2 wt% to 15 wt%, or 8 wt% to 15 wt%, based on the total amount of the aerogel layer. An insulation sheet including an aerogel layer including a binder within the above range may have improved dustiness.

In an example embodiment, the dispersant may be at least one of a surfactant and a phosphate-based salt. For example, the dispersant may include at least one of, without being limited to, a non-ionic surfactant, an anionic surfactant, an amphoteric surfactant, a natural surfactant such as lecithin, and phosphate.

When the dispersant is further included, the fibrous support and the aerogel may be present in the aerogel layer in a more uniformly dispersed state.

The content of the dispersant may be 0.1 wt% to 6 wt%, 0.1 wt% to 5 wt%, or 0.1 wt% to 3 wt%, based on the total amount of the aerogel layer. When the dispersant is included within any of the above ranges, it may be possible to manufacture an insulation sheet having desired, advantageous or improved thermal insulation, compressibility, and dustiness.

The binder and the dispersant may be included in a weight ratio of 1:0.001 to 1:0.67, 1:0.001 to 1:0.5, or 1:0.001 to 1:0.3. Mixing the binder and the dispersant in a weight ratio within the above range may result in more uniform dispersion of the aerogel in the aerogel layer.

In an example embodiment, the fibrous support may be included so as to account for 5 wt% to 70 wt%, the aerogel may be included so as to account for 10 wt% to 90 wt%, and the functional material may be included so as to account for 0.5 wt% to 20 wt%, based on the total amount of the aerogel layer.

As an example, the fibrous support may be included so as to account for 25 wt% to 60 wt%, the aerogel may be included so as to account for 30 wt% to 70 wt%, and the binder may be included so as to account for 2 wt% to 15 wt%, based on the total amount of the aerogel layer.

The fibrous support may be included so as to account for 30 wt% to 50 wt%, the aerogel may be included so as to account for 40 wt% to 60 wt%, and the binder may be included so as to account for 8 wt% to 15 wt%, based on the total amount of the aerogel layer. When the aerogel layer is formed within the above range, it may be possible to realize desired, advantageous or improved thermal insulation while improving durability, and it may be possible to improve the binding between the fibrous support and the aerogel, thereby reducing or preventing dust generation.

As another example, the fibrous support may be included so as to account for 25 wt% to 60 wt%, the aerogel may be included so as to account for 30 wt% to 70 wt%, the binder may be included so as to account for 2 wt% to 15 wt%, and the dispersant may be included so as to account for 0.1 wt% to 5 wt%, based on the total amount of the aerogel layer.

The fibrous support may be included so as to account for 30 wt% to 50 wt%, the aerogel may be included so as to account for 40 wt% to 60 wt%, the binder may be included so as to account for 5 wt% to 10 wt%, and the dispersant may be included so as to account for 0.1 wt% to 3 wt%, based on the total amount of the aerogel layer. When the aerogel layer is formed within any of the above ranges, it is possible to improve dispersibility of the aerogel, to realize desired, advantageous or improved thermal insulation while improving durability, and to improve the binding between the fibrous support and the aerogel, thereby reducing or preventing dust generation.

In the aerogel layer, the surface of the fibrous support may be coated with the aerogel. In this case, the aerogel and the fibrous support may be substantially uniformly distributed, and the binding between the aerogel and the fibrous support may be high, whereby it is possible to reduce dust generation due to detachment of the aerogel.

In an example embodiment, the aerogel layer may have a monolayer structure or a multilayer structure. When the aerogel layer has a multilayer structure, the aerogel layer may have 2 to 10 layers, 2 to 7 layers, or 2 to 5 layers.

In an example embodiment, the refractory layer may include an inorganic binder or may consist of the inorganic binder.

The inorganic binder may be at least one of aluminate, silicate, phosphate, sulfate, and chloride.

The aluminate may be at least one of ordinary calcium aluminate and pure calcium aluminate.

The silicate may be at least one of sodium silicate, potassium silicate, and lithium silicate.

The phosphate may be at least one of sodium phosphate, potassium phosphate, magnesium phosphate, zinc phosphate, calcium phosphate, aluminum phosphate, iron phosphate, sodium dihydrogen phosphate, sodium tripolyphosphate, and sodium hexametaphosphate.

The sulfate may be at least one of magnesium sulfate, aluminum sulfate, and iron (III) sulfate.

The chloride may be at least one of magnesium chloride, iron (III) chloride, and polyaluminum chloride.

As an example, the inorganic binder may be at least one of calcium aluminate, sodium silicate, and aluminum phosphate. By including the inorganic binder, fire resistance of the insulation sheet may be improved, and flame propagation between cells may be reduced or prevented.

A method of manufacturing a battery module according to an example embodiment may include disposing a plurality of cells, disposing an insulation sheet between the plurality of cells such that an upper surface and a lower surface of the insulation sheet face cells adjacent thereto, respectively, and forming a refractory layer on at least one side surface part of a border side surface between the upper surface and the lower surface of the insulation sheet.

In an example embodiment, in disposing the plurality of cells, the form of disposing the plurality of cells is not particularly restricted, and the plurality of cells may be appropriately disposed depending on the type of battery.

In an example embodiment, the insulation sheet may be disposed between the plurality of cells. The insulation sheet may be such that the upper surface and the lower surface of the insulation sheet face cells adjacent thereto, respectively.

The insulation sheet may be manufactured by forming a first substrate, applying an aerogel composition to the first substrate, and forming a second substrate on the applied aerogel composition.

A detailed description of each of the first substrate and the second substrate may be the same as described above, and the size and shape of each substrate may be appropriately adjusted depending on the structure of the cell.

The aerogel composition may be manufactured by mixing a solvent with a functional material including a binder, a dispersant, or a combination thereof to manufacture a solvent mixture, mixing the solvent mixture with an aerogel to manufacture an aerogel mixture, and mixing the aerogel mixture with a fibrous support to manufacture an aerogel composition.

In mixing the solvent with the functional material to manufacture the solvent mixture, the solvent may be mixed with the binder, or the solvent may be mixed with the binder and the dispersant.

The solvent may be at least one a polar solvent and a non-polar solvent.

The polar solvent may include water, an alcohol-based solvent, or a combination thereof.

Water may include purified water, deionized water, or a combination thereof.

The alcohol-based solvent may be at least one of, for example, without being limited to, methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may be at least one of hexane, pentane, heptane, toluene, and benzene, and may be, without being limited to, an alkane solvent such as hexane or a mixture including an alkane solvent.

The solvent may include water. The use of water as a solvent may effectively reduce raw material costs and post-processing costs. When water is used as a solvent, however, water may not be sufficiently mixed with aerogel, which is hydrophobic. In an example embodiment, the aerogel may be dispersed evenly by controlling the design of a mixing process, the mixing conditions, the addition of the binder and the dispersant, and the amount of the binder and the dispersant. This substantially even dispersion of the aerogel in the composition may enable the formation of an insulation sheet having desired, advantageous or improved thermal insulation, durability, and dustiness at a low thickness without the use of a large amount of binder.

The solvent may be included such that the weight ratio of the solvent to the total amount of solids in the aerogel composition is 1:1 to 1:90. For example, the weight ratio of the solvent to the total amount of solids in the aerogel composition may be 1:50 to 1:70, 1:20 to 1:30, or 1:2 to 1:10. By controlling the weight ratio of the solvent to the total amount of solids in the aerogel composition within the above range, the viscosity may be controlled to coat the aerogel layer.

A detailed description of the binder and the dispersant may be similar to, or the same as, described above.

In mixing the solvent mixture with aerogel to manufacture the aerogel mixture, a detailed description of the aerogel may be similar to, or the same as described above.

In mixing the aerogel mixture with the fibrous support to manufacture the aerogel composition, a detailed description of the fibrous support may be similar to, or the same as described above.

In an example embodiment, the aerogel composition may further include a silane-based compound. The silane-based compound may be at least one of, for example, 3-(trimethoxysilyl)propylmethacrylate, methyltriethoxysilane, methyltrimethoxysilane, ethyltrimethoxysilane, octadecyltrimethoxysilane, ethyltriethoxysilane, and 3-glycidoxypropyltrimethoxysilane. Further inclusion of the silane-based compound may further improve dispersibility.

In an example embodiment, the aerogel composition may further include an additive, such as a wetting agent, an emulsifier, a compatibilizer, a viscosity modifier, a pH modifier, a stabilizer, an antioxidant, an acid or base trapping agent, a metal inactivator, a defoamer, an antistatic agent, a thickener, an adhesion improver, a coupling agent, a flame retardant, an impact modifier, pigment, dye, a colorant, or a deodorant.

In each of mixing the solvent with the functional material including the binder, the dispersant, or the combination thereof to manufacture the solvent mixture, mixing the solvent mixture with the aerogel powder to manufacture the aerogel composition, and mixing the aerogel mixture with the fibrous support to manufacture the aerogel composition, mixing may be performed using a mixer. For example, the mixer may include, without being limited to, a planetary mixer and a Thinky^{™} mixer.

As an example, the planetary mixer may be used to mix the solvent mixture with the aerogel powder. The use of the planetary mixer to mix the solvent mixture with the aerogel powder may allow the aerogel powder to be substantially uniformly dispersed in the solvent.

The planetary mixer may be a device that may be used to mix or stir different substances in order to produce a homogeneous mixture. The planetary mixer may include a blade capable of performing planetary motion.

In an example embodiment, the planetary mixer may include at least one of one or more planetary blades and one or more high-speed dispersing blades. As an example, the planetary mixer may include at least one planetary blade and at least one high-speed dispersing blade.

Each, or at least one, of the planetary blade and the high-speed dispersing blade may continuously rotate an axis thereof. The rotation speed may be expressed in rotations per minute (rpm).

In an example embodiment, the planetary mixer may include a first blade and a second blade having different axes of rotation. For example, the first blade may be a low speed blade, and the second blade may be a high speed blade. The low speed and the high speed refer to relative rotational speeds between the first blade and the second blade. As an example, the first blade may be an open blade, and the second blade may be a Despa^{™} blade.

The rotational speed of the first blade may be, for example, 10 rpm to 100 rpm, 10 rpm to 60 rpm, or 30 rpm to 70 rpm. The rotational speed of the second blade may be, for example, 100 rpm to 2000 rpm, 100 rpm to 1000 rpm, 300 rpm to 1700 rpm, or 500 rpm to 1700 rpm.

When the functional material is added to and mixed with the solvent, the rotational speed of the first blade may be 10 rpm to 60 rpm, 20 rpm to 50 rpm, or 30 rpm to 40 rpm, and the rotational speed of the second blade may be 300 rpm to 1700 rpm, 600 rpm to 1000 rpm, or 700 rpm to 800 rpm. When the solvent and the functional material are mixed with each other, as described above, the solvent mixture in which the binder, the dispersant, or the combination thereof is substantially uniformly dispersed may be manufactured to facilitate mixing of the aerogel in a subsequent process.

When the solvent mixture and the aerogel powder are mixed with each other, the rotational speed of the first blade of the mixer may be 30 rpm to 70 rpm, 40 rpm to 70 rpm, or 60 rpm to 70 rpm, and the rotational speed of the second blade may be 500 rpm to 1700 rpm, 600 rpm to 1600 rpm, or 800 rpm to 1500 rpm. When the aerogel powder is added to and mixed with the solvent mixture, as described above, the aerogel powder may be hindered or prevented from clumping together to induce uniform dispersion.

When the aerogel mixture and the fibrous support are mixed with each other, the rotational speed of the first blade of the mixer may be from 10 rpm to 60 rpm, 20 rpm to 50 rpm, or 30 rpm to 40 rpm, and the rotational speed of the second blade may be from 300 rpm to 1700 rpm, 400 rpm to 1500 rpm, or 800 rpm to 1200 rpm. Mixing the aerogel mixture with the fibrous support as described above may remove air bubbles in the composition, control the viscosity, and facilitate dispersion of the fibrous support in the substantially evenly dispersed aerogel, such that the aerogel surrounds the periphery of the fibrous support in the composition. A binder may be present between the aerogel and the fibrous support to improve the binding between the aerogel and the fibrous support.

By forming the insulation sheet using the method according to the example embodiment, thermal insulation and durability may be improved, and the aerogel may be prevented from falling off and creating dust when the insulation sheet is manufactured or installed in an apparatus or when external vibration occurs.

In an example embodiment, forming the refractory layer on at least one side surface part of the border side surface between the upper surface and the lower surface of the insulation sheet may be performed before or after disposing the insulation sheet between the plurality of cells.

As an example, forming the refractory layer may be performed before disposing the insulation sheet between the plurality of cells. In this case, after manufacturing the insulation sheet, the refractory layer may be formed on at least one side surface part of the side surface of the insulation sheet, and the insulation sheet having the refractory layer formed thereon may be disposed between the plurality of cells.

The refractory layer may be formed through a solution process such as gap coating, dip coating, slot die coating, blade coating, dispensing, printing, brush coating, or potting using molding. The refractory layer can be formed by applying an inorganic binder in a solution state dispersed in a solvent or the like to at least one side surface part of the side surface of the insulation sheet and drying the same at room temperature or at a temperature of 40 °C to 80 °C for less than 24 hours.

As another example, forming the refractory layer may be performed after disposing the insulation sheet between the plurality of cells. In this case, the insulation sheet may be disposed between the plurality of cells, and the refractory layer may be formed on at least one side surface part of the side surface of the insulation sheet.

The refractory layer may be formed through a solution process such as gap coating, dispensing, printing, brush coating, or potting. The refractory layer may be formed by injecting an inorganic binder in a solution state dispersed in a solvent or the like into the battery module in which the plurality of cells and the insulation sheet are disposed so as to be applied to at least one side surface part of the side surface of the insulation sheet exposed in the battery module and drying the same at room temperature, or at a temperature of 40 °C to 80 °C for less than 24 hours.

An example embodiment may include a battery pack including the battery module. A plurality of battery modules may be disposed in the battery pack.

Hereinafter, examples will be described. However, the following examples are intended only to illustrate or describe the disclosure and should not be construed as limiting the disclosure. Details that are not described herein may be sufficiently technically inferred by those skilled in the art, and therefore a description thereof will be omitted.

### (Manufacture of battery module)

### Example 1

### 1. Manufacture of insulation sheet

A solvent mixture was manufactured by adding polyvinyl alcohol (Sigma Aldrich), as a binder, to deionized water, as a solvent, and mixing the same at 30 rpm using an open blade and at 700 rpm using a Despa^{™} blade. Subsequently, aerogel powder having a BET value of 800 m²/g was added to the solvent mixture and mixed at 70 rpm using the open blade and at 1500 rpm using the Despa^{™} blade to manufacture an aerogel mixture. An aerogel composition was manufactured by adding glass wool to the aerogel mixture and mixing the same at 30 rpm using the open blade and at 1200 rpm using the Despa^{™} blade. A planetary mixer (DNTEK, PT-005) was used for mixing.

The solids content of the manufactured aerogel composition was found to be 50 wt% of the aerogel, 40 wt% of glass wool, and 10 wt% of polyvinyl alcohol.

A slurry of the manufactured aerogel composition was applied to a 0.1 mm thick mica sheet (Pamica^{™}, Muscovite^{™}), another 0.1 mm thick mica sheet was laminated thereon in a sandwich manner, and coating was performed using a roll-rolling method. Subsequently, an aerogel layer was formed by drying at 60 °C for 24 hours to manufacture an insulation sheet. The total thickness of the manufactured insulation sheet was found to be 1.38 mm.

### 2. Manufacture of refractory layer

A refractory layer was formed by applying calcium silicate, as an inorganic binder, to an upper side surface part of a side surface of the insulation sheet using a dispensing printing method. The thickness of the refractory layer was found to be 0.3 mm.

### 3. Manufacture of battery module

A plurality of cells was disposed in a battery module, and the insulation sheet having the refractory layer formed thereon was disposed between the plurality of cells.

### Example 2

A battery module was manufactured using the same method as in Example 1 with a difference that calcium aluminate was used instead of calcium silicate as the inorganic binder.

### Example 3

A battery module was manufactured using the same method as in Example 1 with a difference that aluminum phosphate was used instead of calcium silicate as the inorganic binder.

### Example 4

A battery module was manufactured using the same method as in Example 1 with a difference that a refractory layer was manufactured using a brush coating method instead of the dispensing printing method.

### Example 5

A battery module was manufactured using the same method as in Example 1 with a difference that a refractory layer was formed on an upper side surface part and a lower side surface part of the side surface of the insulation sheet.

### Example 6

A battery module was manufactured using the same method as in Example 1 with a difference that a refractory layer was formed on the entirety of the side surface of the insulation sheet.

### Example 7

A battery module was manufactured using the same method as in Example 1 with a difference that a refractory layer was formed on an upper side surface part and a lower side surface part of the side surface of the insulation sheet such that the thickness of the refractory layer formed on the upper side surface part was 0.7 mm and the thickness of the refractory layer formed on the lower side surface part was 0.3 mm.

### Example 8

### 1. Manufacture of insulation sheet

A solvent mixture was manufactured by adding polyvinyl alcohol (Sigma Aldrich), as a binder, to deionized water, as a solvent, and mixing the same at 30 rpm using an open blade and at 700 rpm using a Despa^{™} blade. Subsequently, aerogel powder having a BET value of 800 m²/g was added to the solvent mixture and mixed at 70 rpm using the open blade and at 1500 rpm using the Despa^{™} blade to manufacture an aerogel mixture. An aerogel composition was manufactured by adding glass wool to the aerogel mixture and mixing the same at 30 rpm using the open blade and at 1200 rpm using the Despa^{™} blade. A planetary mixer (DNTEK, PT-005) was used for mixing.

The solids content of the manufactured aerogel composition was found to be 50 wt% of the aerogel, 40 wt% of glass wool, and 10 wt% of polyvinyl alcohol.

A slurry of the manufactured aerogel composition was applied to a 0.1 mm thick mica sheet (Pamica^{™}, Muscovite^{™}), another 0.1 mm thick mica sheet was laminated thereon in a sandwich manner, and coating was performed using a roll-rolling method. Subsequently, an aerogel layer was formed by drying at 60 °C for 24 hours to manufacture an insulation sheet. The total thickness of the manufactured insulation sheet was found to be 1.38 mm.

### 2. Manufacture of battery module

A plurality of cells was disposed in a battery module, and the insulation sheet was disposed between the plurality of cells.

### 3. Manufacture of refractory layer

Calcium silicate, as an inorganic binder, was injected into a mold having a trapezoidal empty space defined therein in a solution state so as to wrap an upper side surface part of a side surface of the insulation sheet disposed between the plurality of cells and a part of a side surface of the cell adjacent thereto, and drying was performed to form a refractory layer. The thickness of a central part of the refractory layer was found to be 0.7 mm, and the thickness of opposite edges of the refractory layer was found to be 0.5 mm.

### Comparative Example 1

### 1. Manufacture of aerogel composition

An aerogel composition was manufactured by adding polyvinyl alcohol (Sigma Aldrich), as a binder, and an aerogel having a BET value of 800 m²/g to deionized water, as a solvent, and mixing the same. A planetary mixer (DNTEK, PT-005) was used for mixing.

The solids content of the manufactured aerogel composition was found to be 50 wt% of the aerogel, 40 wt% of glass wool, and 10 wt% of polyvinyl alcohol.

### 2. Manufacture of insulation sheet

A slurry of the manufactured aerogel composition was applied to a 0.1 mm thick mica sheet (Pamica^{™}, Muscovite^{™}), another 0.1 mm thick mica sheet was laminated thereon in a sandwich manner, and coating was performed using a roll-rolling method. Subsequently, an aerogel layer was formed by drying at 60 °C for 24 hours to manufacture an insulation sheet. The total thickness of the manufactured insulation sheet was found to be 1.38 mm.

### (Experimental Examples)

### Experimental Example 1: Evaluation of fire resistance

Fire resistance of each of the insulation sheets manufactured in Examples 1 to 8 and Comparative Example 1 was evaluated.

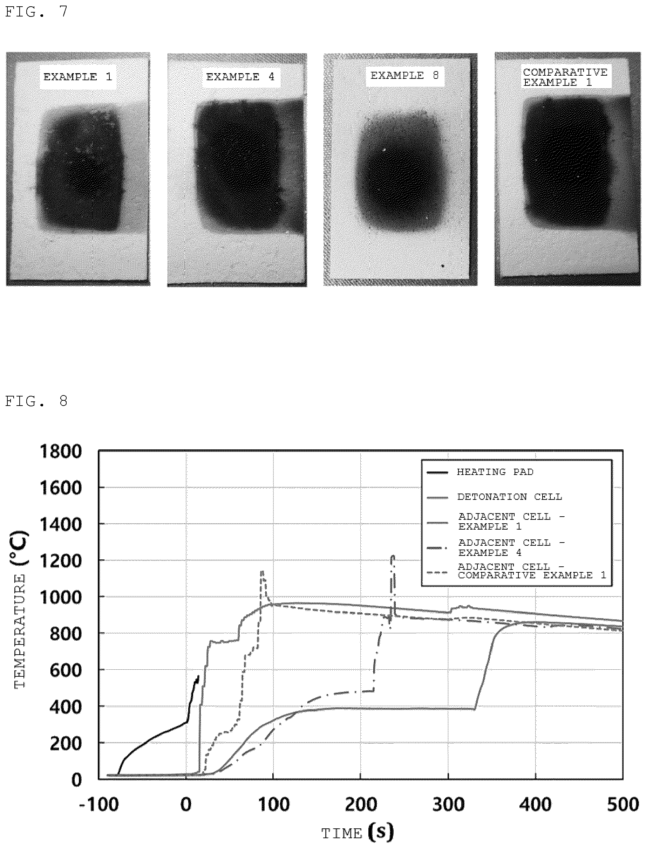

Flames were emitted to the insulation sheet at an emission temperature of 1100 ± 10 °C for 10 minutes in a direction toward the side surface of the insulation sheet having the refractory layer using a gas ignition torch device such that the flames were emitted to the insulation sheet within a distance of 5 cm, and changes such as the collapse of the refractory layer and internal organization thereof were observed. The side surface part of the insulation sheet was cut to a size of 20 x 60 mm, and each insulation sheet was evaluated by measuring toughness representing an energy storage value until the sheet was finally fractured or broken through a 3-point bending test using a universal testing machine (UTM). Measured values of toughness are shown in Table 1 below. Photographs of Examples 1, 4, and 8 and Comparative Example 1 after emission of flames are shown in FIG. 7.

**[Table 1]**

| | Example | | | | | | | | Comparative Example |
|---|---|---|---|---|---|---|---|---|---|
| | 1 | 2 | 3 | 4 | 5 | 6 | 7 | 8 | 1 |
| Toughness (J/m³) | 10. 13 | 11. 48 | 12. 21 | 9.0 3 | 10. 23 | 10. 18 | 11. 54 | 12. 05 | 5.83 |

Referring to Table 1, which shows the results of measurement of toughness of Examples 1 to 3, which is mechanical durability, after flame emission depending on the type of the inorganic binder, it can be seen that, when calcium silicate, calcium aluminate, or aluminum phosphate is used as the inorganic binder, fire resistance is desired, advantageous or improved.

It can be seen from the results of evaluation of fire resistance of Examples 1 and 4 depending on the refractory layer formation method that the dispensing printing method forms a more uniform and dense refractory layer than the brush coating method, achieving better fire resistance.

It can be seen from Example 5 that toughness is further improved when the refractory layer is formed on the upper and lower side surface parts of the side surface of the insulation sheet. It can be seen from Example 6 that the refractory layer is formed on the entirety of the side surface of the insulation sheet, whereby toughness is somewhat improved, and therefore efficiency may be somewhat improved. It can be seen from Example 7 that, when the refractory layer is formed on the upper and lower side surface parts of the side surface of the insulation sheet such that the thickness of the refractory layer formed on the upper side surface part is greater than the thickness of the refractory layer formed on the lower side surface part, toughness is further improved.

It can be seen from Example 8 that, when the refractory layer is formed on the upper and lower side surface parts of the side surface of the insulation sheet and the refractory layer is formed in a trapezoidal shape so as to wrap a part of a side surface of the cell adjacent to the upper side surface part of the side surface of the insulation sheet, toughness is effectively improved.

It can be seen from Comparison Example 1, which includes no refractory layer, that fire resistance is very low.

Interior photographs of the insulation sheets of Examples 1 to 4 and 8 and Comparative Example 1 after fire resistance measurement are shown in FIG. 7. As shown in FIG. 7, it can be seen from the internal structures of Examples that fire resistance of the side surface of the insulation sheet is desired, advantageous or improved due to the formation of the refractory layer.

It can be seen from Comparative Example 1 that the side surface of the insulation sheet has low fire resistance durability while being structurally fragile. It can be seen from Examples 1, 4, and 8 that fire resistance is desired, advantageous or improved, whereby combustion does not occur, and structural stability is desired, advantageous or improved, whereby thermal insulation is also desired, advantageous or improved.

### Experimental Example 2: Evaluation of thermal runaway delay

Thermal runaway delay of each of the insulation sheets manufactured in Examples 1 to 8 and Comparative Example 1 was evaluated.

A thermal runaway test was performed for each insulation sheet through artificial thermal runaway by heating a heating pad attached to a detonation cell (a temperature rise of 20 °C/min) under the condition that an insulation sheet is fastened between cells at a fastening pressure of 15 kN using a simple module device consisting of three prismatic cells, and thermal runaway delay time (s) was measured. The results of measurement are shown in Table 2 below. Temperature changes of Examples 1 and 4 and Comparative Example 1 over time are shown in FIG. 8.

**[Table 2]**

| | Example | | | | | | | | Comparative Example |
|---|---|---|---|---|---|---|---|---|---|
| | 1 | 2 | 3 | 4 | 5 | 6 | 7 | 8 | 1 |
| Thermal runaway delay time (s) | 195 .8 | 187 .5 | 204 .2 | 178 .3 | 203 .8 | 224 .9 | 287 .1 | 312 .2 | 41.8 |

Referring to Table 2, which shows the results of evaluation of thermal runaway delay of Examples 1 to 3 depending on the type of the inorganic binder, it can be seen that, when calcium silicate, calcium aluminate, or aluminum phosphate is used as the inorganic binder, the thermal runaway delay effect is desired, advantageous or improved.

It can be seen from the results of evaluation of thermal runaway delay of Examples 1 and 4 depending on the refractory layer formation method that, when a uniform and dense refractory layer is formed through the dispensing method, the thermal runaway delay effect is better. It can also be seen from FIG. 8 that, in Examples 1 and 4, the temperature rise of adjacent cells during thermal runaway is not immediate but is delayed due to the formation of the refractory layer, and in Example 1, the temperature rise is further delayed during thermal runaway.

It can be seen from the results of evaluation of thermal runaway delay of Examples 1 and 5 to 8 depending on the position and shape of the refractory layer that, when the refractory layer is formed on the upper and lower side surface parts of the border side surface of the insulation sheet, when the refractory layer is formed on the entirety of the side surface of the insulation sheet, or when the refractory layer is formed on the upper and lower side surface parts of the side surface of the insulation sheet and the thickness of the refractory layer formed on the upper side surface part is greater than the thickness of the refractory layer formed on the lower side surface part, a better thermal runaway delay effect is obtained. It can also be seen that, when the refractory layer is formed on the upper and lower side surface parts of the border side surface of the insulation sheet and the refractory layer is formed in a trapezoidal shape so as to wrap a part of a side surface of the cell adjacent to the upper side surface part of the side surface of the insulation sheet, effective thermal runaway delay is possible.

It can be seen from Table 2 above and FIG. 8 that, in Comparative Example 1, it is difficult to delay thermal runaway because no reinforcement material is included and the temperature rise of neighboring cells is immediate.

As is apparent from the above description, a battery module according to an example embodiment may inhibit propagation of heat and flames in a cell to cells adjacent thereto due to thermal runaway in the cell.

The insulation sheet included in the battery module according to the example embodiment may have desired, advantageous or improved thermal insulation, compressibility, mechanical strength, and dimensional stability, whereby it is possible to prevent detachment of an aerogel layer due to external impact, to improve workability, and to prevent contamination of an instrument.

## Claims

1. A battery module (100) comprising:
a plurality of cells (10);
an insulation sheet (20) between the plurality of cells (10), the insulation sheet (20) having an upper surface and a lower surface that face cells adjacent thereto, respectively; and
a refractory layer (30) on at least one side surface part of a border side surface between the upper surface and the lower surface of the insulation sheet (20), wherein
the refractory layer (30) includes an inorganic binder.

2. The battery module (100) as claimed in claim 1, wherein at least one of the cells (10) is a secondary battery cell.

3. The battery module (100) as claimed in claim 1 or 2, wherein the insulation sheet (20) comprises:
a first substrate (21);
a second substrate (22); and
an aerogel layer (23) between the first substrate (21) and the second substrate (22).

4. The battery module (100) as claimed in claim 3, wherein at least one of the first substrate (21) and the second substrate (22) comprises at least one of a resin, a metal, an inorganic material other than the metal, and a composite thereof.

5. The battery module (100) as claimed in claim 3 or 4, wherein the aerogel layer (23) comprises an aerogel and at least one of a fibrous support, and a functional material comprising at least one of a binder, and a dispersant.

6. The battery module (100) as claimed in claim 5, wherein the aerogel has a BET specific surface area of500 m²/g to1,000 m²/g measured according to DIN ISO 9277; and/or
wherein the fibrous support comprises at least one of natural fiber, silica fiber, glass fiber, ceramic fiber, carbon fiber, graphite fiber, mineral fiber, and polymer fiber; and/or
wherein
the binder comprises an aqueous polymer binder, and
the aqueous polymer binder comprises at least one of a water-based polymer, an anionic water-soluble polymer, a cationic water-soluble polymer, and a water-dispersible polymer; and/or
wherein the dispersant comprises at least one of a surfactant and a phosphate-based salt.

7. The battery module (100) as claimed in claim 5 or 6, wherein the aerogel accounts for 10 wt% to 90 wt%, the fibrous support accounts for 5 wt% to 70 wt%, and the functional material accounts for 0.5 wt% to 20 wt%, based on a total amount of the aerogel layer (23).

8. The battery module (100) as claimed in any one of the preceding claims, wherein the inorganic binder comprises at least one of aluminate, silicate, phosphate, sulfate, and chloride.

9. The battery module (100) as claimed in any one of the preceding claims, wherein the inorganic binder comprises at least one of ordinary calcium aluminate, pure calcium aluminate, sodium silicate, potassium silicate, lithium silicate, sodium phosphate, potassium phosphate, magnesium phosphate, zinc phosphate, calcium phosphate, aluminum phosphate, iron phosphate, sodium dihydrogen phosphate, sodium tripolyphosphate, sodium hexametaphosphate, magnesium sulfate, aluminum sulfate, iron (III) sulfate, magnesium chloride, iron (III) chloride, and polyaluminum chloride.

10. The battery module (100) as claimed in any one of the preceding claims, wherein the refractory layer (30) is formed on at least one of upper and lower side surface parts of the side surface of the insulation sheet (20), and substantially an entirety of the side surface of the insulation sheet (20).

11. The battery module (100) as claimed in any one of the preceding claims, wherein a thickness of the refractory layer (30) formed on an upper side surface part of the side surface of the insulation sheet (20) is120% to400% of the thickness of the refractory layer (30) formed on a lower side surface part of the side surface of the insulation sheet (20).

12. The battery module (100) as claimed in any one of the preceding claims, wherein
the battery module (100) comprises an empty space other than a space in which the cells (10) and the insulation sheet (20) are disposed,
the refractory layer (30) wraps the side surface of the insulation sheet (20) and a part or the entirety of a side surface of each of the cells (10) adjacent thereto in the empty space formed in an upper part of the battery module (100), and
the refractory layer (30) is such that a thickness of a central part of the refractory layer (30) is greater than the thickness of opposite edges of the refractory layer (30).

13. A method of manufacturing a battery module (100), the method comprising:
disposing a plurality of cells (10);
disposing an insulation sheet (20) between the plurality of cells (10) such that an upper surface and a lower surface of the insulation sheet (20) are disposed so as to face cells (10) adjacent thereto, respectively; and
forming a refractory layer (30) on at least one side surface part of a border side surface between the upper surface and the lower surface of the insulation sheet (20), wherein
the refractory layer (30) includes an inorganic binder.

14. The method as claimed in claim 13, wherein forming the refractory layer (30) is performed by at least one of gap coating, dip coating, slot die coating, blade coating, dispensing, printing, brush coating, and potting using a solution of an inorganic binder dispersed in a solvent.

15. A battery pack comprising the battery module (100) as claimed in claim 1.
